# EUROPÄISCHE PATENTSCHRIFT

(11) **EP 3 021 997 B1**
(45) Veröffentlichungstag und Bekanntmachung des Hinweises auf die Patenterteilung: **23.11.2016**
(21) Anmeldenummer: 15750260.0
(22) Anmeldetag: 23.07.2015
(51) Int. Cl.: B21K 1/56, F16L 55/11, G01M 3/26, G01N 19/08, F01M 11/04

(54) **DICHTFLÄCHENKORREKTURVORRICHTUNG FÜR DICHTSCHRAUBEN SOWIE SYSTEM UND VERFAHREN**
SEALING SURFACE CORRECTING DEVICE FOR SEALING SCREWS, SYSTEM, AND METHOD
DISPOSITIF DE CORRECTION DE SURFACE D'ÉTANCHÉITÉ POUR BOUCHONS FILETÉS, ET SYSTÈME ET PROCÉDÉ

(30) Priorität: 19.09.2014 DE 202014104493 U
(43) Veröffentlichungstag der Anmeldung: 25.05.2016
(73) Patentinhaber: Flaig, Hartmut, 78554 Aldingen (DE)
(72) Erfinder: Flaig, Hartmut, 78554 Aldingen (DE)
(74) Vertreter: Wagner, Kilian
(86) Internationale Anmeldenummer: PCT/EP2015/066935
(87) Internationale Veröffentlichungsnummer: WO 2016/041667

(56) Entgegenhaltungen:
- DE-A1- 10 112 530
- DE-B4-102006 046 631
- JP-A- S55 151 238
- US-A- 1 458 006

## Beschreibung

Die Erfindung betrifft eine Dichtflächenkorrekturvorrichtung für, insbesondere als Schüttgut behandelte, Dichtschrauben aus Metall gemäß dem Anspruch 1, eine solche Vorrichtung, eine Dichtschraube (Verschlussschraube) umfassendes System gemäß Anspruch 10, sowie ein kombiniertes Dichtflächenkorrektur- und Dichtheitsprüfverfahren gemäß Anspruch 12.

Der Anmelder hat verschiedene als Kaltfließpressteile ausgebildete Dichtschrauben zum Verschließen einer Ölleitung oder eines Ölbehälters, insbesondere in einem Kraftfahrzeug, entwickelt. Eine solche Dichtschraube des Anmelders ist beispielsweise in der DE 10 2006 046 631 B1 beschrieben. Die bekannte Dichtschraube umfasst einen plattenförmigen Schraubenkopf sowie einen sich von diesem ausgehend nach vorne erstreckenden Schaft mit Außengewinde. In der unteren Stirnseite des Schraubenkopfes ist eine Ringnut vorgesehen, die radial außen von einer axialen, ringförmigen Dichtfläche zur Anlage an einer Auflagefläche eines Aufnahmeelementes begrenzt ist. In der Druckschrift ist beschrieben, dass es vorteilhaft ist, die Dichtschraube ohne zusätzliche elastomere Ringdichtung einzusetzen. Diese Forderung bereitet in der Praxis bei Überschreiten enger Fertigungstoleranzen Probleme. Eine weiter verbesserte Dichtschraube ist in der DE 20 2013 105 922 U1 des Anmelders beschrieben, die wie die in der vorgenannten Druckschrift offenbarte Dichtschraube eine ringförmige Dichtfläche aufweist. Vorgenannte Dichtschrauben werden durch Kaltfließpressen hergestellt und fallen nach dem mehrstufigen Pressvorgang in einen Schüttgutbehälter, wodurch es zu Beschädigungen der Dichtfläche kommen kann. So sind immer wieder Einkerbungen und dergleichen Unebenheiten bzw. Macken in der Dichtfläche zu beobachten, die zu einer mangelnden Dichtheit der ohne Elastomerdichtung einzusetzenden Dichtschraube führen.

Zum weiteren Stand der Technik werden die DE 101 12 530 A1, JP S55 151238 A sowie die US 1 458 006 A genannt.

Der Erfindung liegt daher die Aufgabe zugrunde, eine Vorrichtung sowie ein Verfahren anzugeben, mit der sich trotz einer Schüttgutbehandlung der Dichtschrauben der Ausschuss (Anteil undichter Dichtschrauben) reduzieren und gleichzeitig eine verlässliche Dichtheit der übrigen Dichtschraube garantieren lässt.

Diese Aufgabe wird mit einer Dichtflächenkorrekturvorrichtung mit den Merkmalen des Anspruchs 1 gelöst. Die erfindungsgemäße Dichtflächenkorrekturvorrichtung für, insbesondere als Schüttgut behandelte, Dichtschrauben aus Metall, insbesondere für Kaltfließpressteildichtschrauben, umfasst bevorzugt hydraulische (alternativ beispielsweise elektromotorische) Umformmittel zum Beaufschlagen einer axialen, insbesondere ringförmigen, vorzugsweise auf der Unterseite eines Schraubenkopfumfangbundes ausgebildete Dichtfläche einer Dichtschraube mit einer Umformkraft zur Korrektur von Deformierungen der Dichtfläche, insbesondere von Einkerbungen aufgrund einer Schüttgutbehandlung. Ferner weist die Vorrichtung Dichtheitsprüfmittel zum Prüfen der Dichtwirkung der Schraube durch Druckbeaufschlagung mit einem Druckmedium auf, wobei eine Prüfkammer zur Druckmediumbeaufschlagung, insbesondere Druckluftbeaufschlagung, der Dichtschraube Bestandteil der Umformmittel ist.

Hinsichtlich des Verfahrens wird die Aufgabe mit den Merkmalen des Anspruchs 12 gelöst.

Vorteilhafte Weiterbildungen der Erfindung sind in den Unteransprüchen angegeben.

Der Erfindung liegt der Gedanke zugrunde, eine kombinierte Dichtflächenkorrektur- und Dichtheitsprüfungsvorrichtung anzugeben, also eine Vorrichtung, mit der sowohl durch Aufbringen einer Umformkraft Deformierungen der Dichtfläche ausgebessert, insbesondere Einkerbungen mit benachbart der Einkerbungen vorgesehenen Dichtschraubenmetall gefüllt (durch axiale Druckkraftbeaufschlagung wird Material in Kerben hinein verdrängt) werden können sowie die Dichtheit der entsprechend korrigierten bzw. im Bereich der Dichtfläche umgeformten Dichtschraube überprüft werden kann. Kernbestandteil der erfindungsgemäßen Vorrichtung ist dabei eine Prüfkammer zur Beaufschlagung der Dichtschraube mit einem Druckmedium, insbesondere mit Druckluft, wobei die Prüfkammer gleichzeitig Bestandteil der die Umformkraft einbringenden oder aufnehmenden Mittel ist, was bedeutet, dass die Prüfkammer die Druckkraft der Umformmittel übertragen oder aufnehmen muss. Dies kann gemäß einer vorteilhaften Ausgestaltung der erfindungsgemäßen Vorrichtung dadurch erreicht werden, dass die Prüfkammer entweder Teil eines bewegten Druckstempels ist oder alternativ Bestandteil eines Widerlagers, auf dem sich die Dichtschraube bei der Druckkraftbeaufschlagung (Umformkraftbeaufschlagung) abstützt. Bevorzugt sind die Umformmittel dabei derart ausgestaltet, dass die Umformkraft senkrecht zu einer von der Dichtfläche der Dichtschraube aufgespannten bzw. die Dichtfläche aufnehmenden Ebene aufgebracht wird. Anders ausgedrückt wird ein Druckstempel der Umformmittel bevorzugt entlang der Längserstreckung eines Dichtschraubenschaftes relativ zur Dichtschraube bewegt.

Die erfindungsgemäße Vorrichtung korrigiert also einen Großteil der ansonsten einen Ausschluss bildenden Dichtschrauben mit "Macke" an der Dichtfläche und ermöglicht zudem gleichzeitig eine Überprüfung der Dichtheit einer korrigierten Schraube vorzugsweise während der Kraftbeaufschlagung der Dichtschraube mit Hilfe der Umformmittel.

Anders ausgedrückt kann im Wesentlichen in einem Arbeitsgang über die Prüfkammer eine Umformkraft auf die Dichtfläche aufgebracht und an derselben Position der Dichtschraube relativ zu den Umformmitteln der Erfolg der Korrektur überprüft werden, indem die sich vorzugsweise an der Dichtfläche abstützende Prüfkammer mit einem Druckmedium beaufschlagt wird, wobei eine dichte Schraube, also eine ausreichend intakte Dichtfläche, den beaufschlagten Druck oder einem vordefinierten Mindestdruck über eine vorgegebene Zeit halten sollte/muss.

Ein weiterer überraschender Vorteil ist, dass durch die Druckkraftbeaufschlagung (Umformkraftbeaufschlagung) die Dichtwirkung der Dichtschraube ganz allgemein verbessert wird (auch ohne vorherige Fehlstellen), was möglicherweise auch auf die aus der Druckbeaufschlagung resultierende Glättung der Oberfläche (Dichtfläche) zurückzuführen ist.

Unter der Dichtfläche der Schraube wird gemäß einer ersten Alternative eine Fläche verstanden, mit welcher die Dichtschraube sich unmittelbar zur Abdichtung an einem, vorzugsweise die Dichtschraube aufnehmenden, Bauteil, beispielsweise einer Ölwanne oder eine Ölleitung zu Abdichtzwecken absützt. Bei dieser Auslegung handelt es sich also bei der Dichtschraube um eine Schraube, die ohne zusätzliche Elastomerdichtung auskommt. Gemäß einer zweiten Alternative wird unter einer Dichtfläche eine Fläche verstanden, mit der sich die Dichtschraube bei der bestimmungsgemäßen Verwendung an einer Elastomerdichtung abstützt. In beiden Fällen handelt es sich also bei der Dichtfläche um eine im Rahmen der Erfindung zu überprüfende Fläche der Schraube, die für eine optimale Dichtwirkung möglichst fehlerfrei sein sollte.

Die Erfindung führt auch auf ein kombiniertes Korrektur- und Dichtheitsprüfverfahren. Das Verfahren zeichnet sich dadurch aus, dass die Dichtfläche einer metallischen Dichtschraube (insbesondere Kaltfließpressteil) mit einer Umformkraft beaufschlagt wird und noch während einer Kraftbeaufschlagung der Dichtfläche die Dichtheit überprüft wird, insbesondere durch den Einsatz einer nach dem Konzept der Erfindung ausgebildeten Dichtflächenkorrekturvorrichtung. Wesentlich ist, dass die Korrektur der Dichtfläche und die Dichtheitsprüfung an derselben Position der Schraube durchgeführt wird. Bevorzugt wird die Dichtschraube als Bestandteil des Verfahrens vor der Korrektur als Schüttgut in einem Schüttgutbehälter behandelt bzw. transportiert.

Das erfindungsgemäße Verfahren kann grundsätzlich mit zwei Arten von Dichtschrauben durchgeführt werden. Gemäß einer ersten Alternative handelt es sich bei der im Rahmen des Verfahrens bzw. mittels der Vorrichtung zu überprüfenden Dichtschraube um eine unmittelbar dichtende Schraube, bei der sich die Dichtfläche unmittelbar an einem, insbesondere die Schraube aufnehmenden Bauteil, beispielsweise einer Ölwanne oder einer Fluidleitung abstützt. Dabei ist dann bevorzugt keine Elastomerdichtung zwischen der Dichtfläche und dem Bauteil vorgesehen. Bevorzugt ist es in diesem Fall, wenn die Dichtfläche von einer Art ringförmigen Dichtwulst gebildet ist. Gemäß einer zweiten Alternative wird im Rahmen des Verfahrens eine Dichtschraube eingesetzt, deren Dichtfläche sich bei bestimmungsgemäßer Verwendung nicht unmittelbar an einem die Dichtschraube aufnehmenden Bauteil abstützt, sondern an einer Zwischendichtfläche und Bauteil anzuordnenden Elastomerdichtung. Bevorzugt ist die Dichtfläche in diesem Fall als ebene Fläche ausgebildet.

In Weiterbildung der Erfindung ist mit Vorteil vorgesehen, dass die Prüfkammer derart ausgebildet ist, dass in dieser ein Schraubenschaft der Dichtschraube, welcher bevorzugt mit einem Außengewinde versehen ist und/oder eine Sacklockvertiefung über mindestens ein Drittel der Längenerstreckung des Schraubenschaftes aufweist, aufgenommen werden kann (im Rahmen des Verfahrens aufgenommen wird), so dass derjenige Teil der Dichtschraube, der im bestimmungsgemäßen Einsatz mit Druck, insbesondere mit Öldruck beaufschlagt ist, in der Prüfkammer mit Druckmedium beaufschlagbar ist, um somit die bestimmungsgemäße Verwendung möglichst exakt bei der Dichtheitsprüfer zu simulieren. Dabei ist es besonders bevorzugt, wenn sich die Prüfkammer, insbesondere mit einer stirnseitigen Ringfläche axial auf der Dichtfläche der Schraube abstützt. Bevorzugt handelt es sich bei der Abstützfläche der Prüfkammer um eine planebene Fläche - denkbar ist jedoch alternativ auch eine Konturierung der Abstützfläche mit einer Ringwulstgeometrie zur formkongruenten Aufnahme in einer entsprechenden Vertiefung bzw. Aussparung in der Schraube radial benachbart zur Dichtfläche. Wie bereits erwähnt, kann die Prüfkammer, was bevorzugt ist, unmittelbar Bestandteil eines Druckstempels zur Umformkraftbeaufschlagung der Dichtschraube sein. Alternativ drückt der Stempel quasi von hinten auf die Dichtschraube und die Dichtschraube liegt auf der Abstützfläche der Prüfkammer auf, welche insofern dann ein Widerlager für den Druckstempel bildet.

Besonders bevorzugt ist eine Ausführungsform der Vorrichtung, bei der die Dichtheitsprüfmittel, insbesondere von Logikmitteln gebildete, Klassifizierungsmittel aufweisen, die eine Dichtschraube dann als undicht klassifizierend ausgebildet sind, wenn ein von einer Druckmesseinrichtung der Dichtheitsprüfmittel gemessener Mindestdruck des Mediums nicht über eine vorgegebene Zeitspanne gehalten wird und/oder wenn ein von der Messeinrichtung messbarer Grenzdruck innerhalb einer vorgegebenen Zeitspanne unterschritten wird.

Als besonders vorteilhaft hat es sich herausgestellt, wenn die Vorrichtung Markier- und oder Aussortiermittel umfasst, mit denen von den Dichtheitsprüfmitteln als undicht klassifizierte Dichtschrauben markierbar und/oder aus dem Teilestrom aussortierbar sind. Es ist denkbar, dass die Beschädigung mancher Dichtschrauben so groß ist, dass eine Umformung nicht den gewünschten ausreichenden Dichtheitseffekt erzielt oder dass die Schraube, insbesondere vom Herstellprozess (Kaltfließpressen) herrührende Haarrisse aufweist, die für die Undichtheit sorgen. Derartige Dichtschrauben können im Rahmen der Weiterbildung der Erfindung markiert und/oder aussortiert werden, so dass deren Einbau, beispielsweise im Kfz-Bereich sicher verhindert wird.

Als besonders vorteilhaft hat es sich erwiesen, wenn die Prüfkammer mit einer Druckmediumquelle, insbesondere einer Druckluftquelle verbunden ist. Für eine spätere Verwendung der Dichtschraube als Ölschraube ohne Elastomerdichtung hat es sich als ausreichend herausgestellt, wenn die Prüfkammer mit Druckluft als Druckmedium beaufschlagt wird, insbesondere mit einem üblichen Druckluftnetzdruck von beispielsweise 8 bar.

Wie eingangs bereits angedeutet ist es besonders vorteilhaft, wenn die Dichtheitsprüfung vor Beendigung einer Druckbeaufschlagung der Dichtfläche mit Hilfe der Umformmittel durchgeführt wird. Dabei kann die Dichtheitsprüfung gemäß einer ersten Alternative während der Beaufschlagung der Dichtfläche mit dem Umformdruck durchgeführt werden oder, zumindest zeitweise während der Beaufschlagung mit einem davon abweichenden, insbesondere geringeren, Prüfdruck. Bevorzugt kann der Prüfdruck, zumindest näherungsweise dem realen Anpressdruck bei einer späteren, bestimmungsgemäßen Verwendung der Dichtschraube entsprechen, sobald sich der Anpressdruck aus dem bestimmungsgemäßen Anzugsmoment der Dichtschraube bei der bestimmungsgemäßen Verwendung ergibt.

Wesentlich ist jedoch, dass die Dichtschraube ohne an eine weitere Bearbeitungsstation transportiert werden zu müssen der Dichtheitsprüfung unterzogen werden kann.

Um eine Ausrichtung der Dichtfläche zu einer Anlagefläche (Abstützfläche) eines Druckstempels der Umformmittel zu ermöglichen, also sicherzustellen, dass die Dichtfläche parallel zur Anlagefläche der Umformmittel ausgerichtet ist, ist in Weiterbildung der Erfindung mit Vorteil vorgesehen, dass die Dichtschraube, insbesondere das die Dichtschraube aufnehmende Widerlager und/oder die Umformmittel entsprechend beweglich gelagert sind, insbesondere sphärisch gelagert sind, um somit die automatische Ausrichtung bei axialer Umformkraftbeaufschlagung zu gewährleisten.

Die Erfindung führt auch auf ein System umfassend eine nach dem Konzept der Erfindung ausgebildete Vorrichtung sowie eine, insbesondere in der Prüfkammer befindliche Dichtschraube. Die Dichtschraube zeichnet sich durch ihre Ausbildung aus Metall aus und gemäß einer ersten Alternative durch die Ausbildung einer Dichtfläche unmittelbar an der Dichtschraube, die den Einsatz der Dichtschraube ohne Elastomerdichtung ermöglicht. Ganz besonders bevorzugt ist die Dichtschraube ausgebildet wie in der DE 10 2006 046 631 B1 oder der DE 20 2013 105 922 U1 beschrieben. Gemäß einer zweiten Alternative dient die dann bevorzugt ebene Dichtfläche nicht zum unmittelbaren Abstützen an einem anderen Metallteil, sondern zur Dichtungspressung einer zwischen der Dichtschraube und dem weiteren Bauteil anzuordnenden Elastomerdichtung. Auch in diesem Fall ist es bevorzugt die Dichtfläche möglichst fehlerfrei auszugestalten.

Besonders zweckmäßig ist es, wenn das System einen Schüttgutbehälter mit einer Vielzahl von zu korrigierenden und/oder überprüfenden Dichtschrauben umfasst. Bevorzugt handelt es sich um einen Schüttgutbehälter, der zuvor von einer Presse mit im Kaltfließpressverfahren hergestellten Dichtschrauben befüllt wurde.

Weitere Vorteile, Merkmale und Einzelheiten der Erfindung ergeben sich aus der nachfolgenden Beschreibung bevorzugter Ausführungsbeispiele sowie anhand der Zeichnungen.

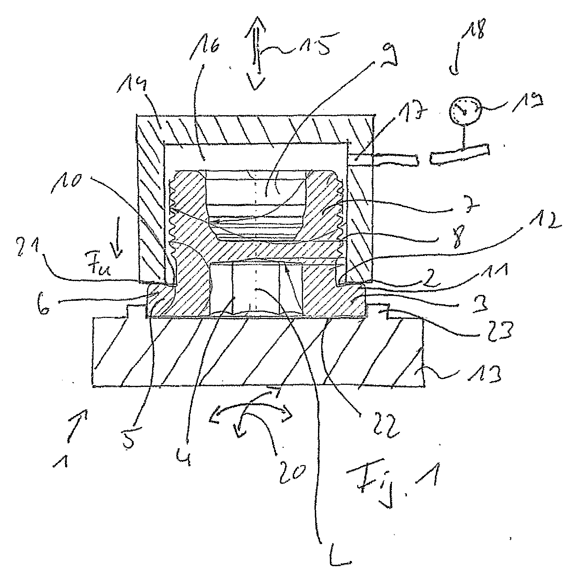

Diese zeigen in der einzigen
- Fig. 1: eine nach dem Konzept der Erfindung ausgebildete, kombinierte Dichtflächenkorrektur- und Dichtheitsprüfvorrichtung für Dichtschrauben aus Metall.

In Fig. 1 ist eine Vorrichtung 1 zum Korrigieren einer ringförmigen Dichtfläche 2 einer als Verschlussschraube ausgebildeten Dichtschraube 3 aus Metall gezeigt, wobei mittels der gleichen Vorrichtung 1 in der selben Position auch die Dichtheit der Dichtschraube 3 überprüfbar ist.

Die zum Einsatz kommende Dichtschraube 3 ist bevorzugt als Kaltfließpressteil ausgebildet und umfasst einen hinteren Antrieb 4, hier beispielhaft ein Sechskantantrieb, der von hinten in einem Schraubenkopf 5 ausgebildet ist. Der Schraubenkopf 5 ist plattenartig ausgestaltet, wobei ein Umfangsbund 6 des Schraubenkopfes 5 einen Schaft 7 mit Außengewinde 8 in radialer Richtung überragt. Zur Einsparung von Gewicht ist von der Vorderseite, d.h. von der dem Schraubenkopf 5 abgewandten Axialseite her eine Sacklochvertiefung 9 vorgesehen, die während der Herstellung im Kaltfließpressverfahren eingebracht ist.

An einer dem Schaft 7 zugewandten Unterseite 10 des Umfangsbundes 6 ist die Dichtfläche 2 ausgebildet. Diese wird gebildet von einer Art Ringwulst 11, welche wiederum gebildet ist von einer Art ringförmigen Einstich 12 auf der Unterseite 10 des Umfangsbundes 6 (hergestellt im Kaltfließpressverfahren), wobei sich der Einstich 12 radial zwischen dem Schaft 7 und dem resultierenden Ringwulst 11 befindet.

Die bevorzugt aus Stahl ausgebildete Dichtschraube 3 ist in dem gezeigten Ausführungsbeispiel eingespannt zwischen einem Widerlager 13 der Vorrichtung 1 sowie einem Druckstempel 14 von Umformmitteln. Der Druckstempel 14, welcher bevorzugt hydraulisch axial entlang der Pfeilrichtung 15 relativ zur Dichtschraube 3 verstellbar ist, dient zum Beaufschlagen der ringförmigen Dichtfläche 2 mit einer Umformkraft, die so gewählt ist, dass mit dieser Einkerbungen aufgrund der Schüttgutbehandlung in der Dichtfläche geglättet bzw. ausgeglichen werden können. Die axiale Verstellung des Druckstempels 14 erfolgt entlang der Längsmittelachse L der Dichtschraube 3, wobei die Längsmittelachse L senkrecht zu einer Auflagefläche 22 des Widerlagers 13 orientiert ist.

In dem gezeigten Ausführungsbeispiel ist Bestandteil des Druckstempels 14 eine Prüfkammer 16, die bevorzugt in dem Druckstempel 14 ausgebildet ist. Die Prüfkammer 16 umfasst einen Druckmediumanschluss 17 zur Beaufschlagung der den Schaft 7 aufnehmenden Prüfkammer 16 mit Druckmedium, beispielsweise Druckluft. Mit Hilfe von Dichtheitsprüfmitteln 18, die eine Druckmesseinrichtung 19 umfassen, kann die Dichtheit der Dichtschraube, genauer der Dichtfläche 2 während der Kraftbeaufschlagung der Dichtfläche 2 mit Hilfe des Druckstempels 14 überprüft werden. Bevorzugt erfolgt die Druckmessung elektronisch, wobei ein Druckmesser mit entsprechenden Logikmitteln verbunden ist, die eine Schraube dann als undicht klassifizieren, wenn ein vorgegebener Druck nicht über eine vorgegebene Zeit gehalten wird. Bevorzugt weist die Vorrichtung für als undicht klassifizierte Dichtschrauben nicht gezeigte Aussortier- oder Markiermittel auf, die diese Dichtschrauben, beispielsweise farbig markieren und/oder durch Ausblasen oder eine entsprechende Mechanik oder dergleichen Aussortiermittel aus dem Prozess bzw. Warenstrom aussortieren. In dem gezeigten Ausführungsbeispiel ist das Widerlager 13, wie über Pfeile 20 angedeutet ist, sphärisch gelagert, um somit eine Ausrichtung der Dichtfläche 2 zu einer Abstützfläche 21 des Druckstempels 14, in dem konkreten Ausführungsbeispiel der Prüfkammer 16 zu ermöglichen. Zusätzlich oder alternativ kann der Druckstempel 14 entsprechend gelagert sein. Die in Fig. 1 gezeigte Vorrichtung ist auch kinematisch umkehrbar, indem das hier als Widerlager 13 gekennzeichnete Bauteil den axial verstellbaren Stempel bildet und die Prüfkammer 14 das Widerlager.

Zur Gewährleistung einer definierten Position (Zentrierung) der Dichtschraube 3 sind dieser randseitig, an dem Widerlager 13 vorgesehene Zentriermittel 23, insbesondere in Form eines Positionierringes zugeordnet.

### Bezugszeichenliste

- 1: Vorrichtung
- 2: Dichtfläche
- 3: Dichtschraube
- 4: Antrieb
- 5: Schraubenkopf
- 6: Umfangsbund
- 7: Schaft
- 8: Außengewinde
- 9: Sacklochöffnung
- 10: Unterseite
- 11: Ringwulst
- 12: Einstich
- 13: Widerlager
- 14: Druckstempel
- 15: Pfeilrichtung
- 16: Prüfkammer
- 17: Druckmediumanschluss
- 18: Dichtheitsprüfmittel
- 19: Druckmesseinrichtung
- 20: Pfeile (Lagerung)
- 21: Abstützfläche
- 22: Auflagefläche
- 23: Zentriermittel

- L: Längsmittelachse

## Patentansprüche

1. Dichtflächenkorrekturvorrichtung für, insbesondere als Schüttgut behandelte, Dichtschrauben (3) aus Metall, insbesondere Kaltfließpressteildichtschrauben, mit, bevorzugt hydraulisch angetriebenen, Umformmitteln zum Beaufschlagen einer, vorzugsweise auf der Unterseite (10) eines Schraubenkopfumfangsbundes ausgebildeten, Dichtfläche (2) einer Dichtschraube (3) mit einer Umformkraft zur Korrektur von Deformierungen der Dichtfläche (2), insbesondere von Einkerbungen aufgrund einer Schüttgutbehandlung, sowie mit Dichtheitsprüfmitteln (18) zum Prüfen der Dichtwirkung der Dichtschraube (3) durch Druckbeaufschlagung mit einem Druckmedium, wobei eine Prüfkammer (16) zur Druckmediumbeaufschlagung der Dichtschraube (3) Bestandteil der Umformmittel ist.

2. Vorrichtung nach Anspruch 1,
**dadurch gekennzeichnet,**
**dass** die Prüfkammer (16) zur Aufnahme eines Schraubenschaftes der Dichtschraube (3) während der Umformkraftbeaufschlagung und der Druckmediumbeaufschlagung sowie zur Anlage an der Dichtfläche (2) der Dichtschraube (3) ausgebildet ist.

3. Vorrichtung nach einem der Ansprüche 1 oder 2,
**dadurch gekennzeichnet,**
**dass** die Dichtheitsprüfmittel (18), insbesondere von Logikmittein gebildete, Klassifizierungsmittel aufweisen, die eine Dichtschraube (3) als undicht klassifizierend ausgebildet sind, wenn ein von einer Druckmesseinrichtung der Dichtheitsprüfmittel (18) messbarer Mindestdruck des Druckmediums nicht über eine vorgegebene Zeitspanne gehalten wird und/oder wenn ein von der Messeinrichtung messbarer Grenzdruck innerhalb einer vorgegebenen Zeitspanne unterschritten wird.

4. Vorrichtung nach einem der vorhergehenden Ansprüche,
**gekennzeichnet**
**durch** Markier- und/oder Aussortiermittel zum Markieren und/oder Aussortieren von von den Dichtheitsprüfmitteln (18) als undicht klassifizierten Dichtschrauben (3).

5. Vorrichtung nach einem der vorhergehenden Ansprüche,
**dadurch gekennzeichnet**,
die Prüfkammer (16) Bestandteil eines relativ zu der Dichtschraube (3) verstellbaren Druckstempels (14) zum Beaufschlagen der Dichtfläche (2) der Dichtschraube (3) mit der Umformkraft oder Bestandteil eines ortsfest angeordneten Widerlagers zum Abstützen der Dichtschraube (3) bei Beaufschlagung mit der Umformkraft ist.

6. Vorrichtung nach einem der vorhergehenden Ansprüche,
**dadurch gekennzeichnet,**
**dass** die Prüfkammer (16) mit einer Druckmediumquelle, insbesondere einer Druckluftquelle, verbunden ist.

7. Vorrichtung nach einem der vorhergehenden Ansprüche,
**dadurch gekennzeichnet,**
**dass** den Dichtheitsprüfmitteln (18) Steuermittel zugeordnet sind, die die Dichtheitsprüfung noch während der Umformkraftbeaufschlagung der Dichtschraube (3) oder alternativ während einer im Vergleich zu der Umformkraftbeaufschlagung reduzierten Kraftbeaufschlagung mittels der Umformmittel initiierend, bevorzugt vollständig durchführend, ausgebildet sind.

8. Vorrichtung nach einem der vorhergehenden Ansprüche,
**dadurch gekennzeichnet,**
**dass** die Vorrichtung Handhabungsmittel umfasst, die dazu ausgebildet sind aus einem Schüttgutvorrat, insbesondere einem Schüttgutbehälter, Dichtschrauben (3) den Umformmitteln und den Dichtheitsprüfmittel zu transferieren.

9. Vorrichtung nach einem der vorhergehenden Ansprüche,
**dadurch gekennzeichnet,**
**dass** der Dichtschraube (3) und/oder den Umformmitteln Lagermittel zum, insbesondere sphärischen, beweglichen Lagern der Dichtschraube (3) und/oder der Umformmittel zum Gewährleisten einer Parallelität von Dichtfläche (2) und einer Anlagefläche der Umformmittel zugeordnet sind.

10. System umfassend eine Vorrichtung nach einem der vorhergehenden Ansprüche und mindestens eine, bevorzugt einen eine Sacklochausnehmung aufweisenden Außengewindeschaft aufweisende, Dichtschraube (3) aus Metall, insbesondere einer Kaltfließpressteildichtschraube.

11. System nach Anspruch 10,
**dadurch gekennzeichnet,**
**dass** das System einen Schüttgutbehälter mit einer Vielzahl von zu korrigierenden und/oder hinsichtlich ihrer Dichtheit zu überprüfenden Dichtschraube (3) als Schüttgut umfasst.

12. Verfahren zur kombinierten Korrektur der Dichtfläche (2) von Dichtflächen (2) von Dichtschrauben (3) sowie zum Prüfen der Dichtwirkung der Dichtschrauben (3), vorzugsweise unter Verwendung einer Dichtflächenkorrekturvorrichtung nach einem der Merkmale 1 bis 9, **gekennzeichnet durch** die Schritte:
- Bereitstellen mindestens einer, insbesondere als Schüttgut behandelten, Dichtschraube (3) aus Metall, insbesondere mindestens eine Kaltfließpressteildichtschraube, vorzugsweise in einem Schüttgutbehälter;
- Beaufschlagen einer, vorzugsweise auf der Unterseite (10) eines Schraubenkopfumfangbundes der zu prüfenden Dichtschraube (3) ausgebildeten Dichtfläche (2) mit einer Umformkraft zur Korrektur von Deformierungen der Dichtfläche (2), insbesondere von Einkerbungen aufgrund einer Schüttgutbehandlung, wobei die Umformkraft von einer Prüfkammer (16) zur Prüfung der Dichtwirkung der Dichtschraube (3) aufgenommen oder auf die Dichtfläche (2) der Dichtschraube (3) übertragen wird;
- Beaufschlagen der Dichtschraube (3) mit einem Druckmedium zur Überprüfung der Dichtheit der Dichtschraube (3) mittels der Prüfkammer (16), mit der auch die Umformkraft zur Korrektur der Deformierungen der Dichtfläche (2) übertragen oder aufgenommen wird.

13. Verfahren nach Anspruch 12,
**dadurch gekennzeichnet,**
**dass** die von der Prüfkammer (16) auf die Dichtschraube (3) übertragene oder von der Prüfkammer (16) aufgenommene Umformkraft so bemessen wird, dass Material der Dichtschraube (3) in die Deformierungen, insbesondere Kerben der Dichtfläche (2) hineinverdrängt wird.

14. Verfahren nach einem der Ansprüche 12 oder 13,
**dadurch gekennzeichnet,**
**dass** die Prüfkammer (16) während der Umformkraftbeaufschlagung und der Druckmediumbeaufschlagung an der Dichtfläche (2) der Dichtschraube (3) anliegt und vorzugsweise einen Schraubenschaft der Dichtschraube (3) aufnimmt.

15. Verfahren nach einem der Ansprüche 12 bis 14,
**dadurch gekennzeichnet,**
**dass** noch während einer Kraftbeaufschlagung der Dichtfläche (2) durch die Prüfkammer (16) die Dichtheit überprüft wird.

16. Verfahren nach einem der Ansprüche 12 bis 15,
**dadurch gekennzeichnet,**
**dass** die Prüfkammer (16) während der Umformkraftbeaufschlagung zur Korrektur der Dichtfläche (2) und der Dichtheitsprüfung an derselben Position der Dichtschrauben (3) anliegt.

## Claims

1. A sealing surface correcting device for sealing screws (3), in particular sealing screws handled as bulk material, which are made of metal, in particular cold extruded part sealing screws, comprising shaping means, which are preferably hydraulically driven, for applying a shaping force to a sealing surface (2) of a sealing screw (3), preferably a sealing surface formed on the lower face (10) of a screw head peripheral collar, in order to correct deformations of the sealing surface (2), in particular indentations due to a bulk material handling process, and with seal testing means (18) for checking the sealing effect of the sealing screw (3) by applying pressure using a pressure medium, wherein a test chamber (16) for supplying a pressure medium to the sealing screw (3) is a part of the shaping means.

2. The device according to Claim 1,
**characterized in that**
the test chamber (16) is constructed to receive a screw shaft of the sealing screw (3) during the application of shaping force and the supplying of pressure medium and for abutting against the sealing surface (2) of the sealing screw (3).

3. The device according to one of Claims 1 or 2,
**characterized in that**
the seal testing means (18) have classification means, formed in particular by logic means, which are configured classifying a sealing screw (3) as not tight when a minimum pressure of the pressure medium, measurable by a pressure measurement device of the seal testing means (18), is not maintained over a predetermined time span and/or when a limit pressure, measurable by the measurement device, is fallen below within a predetermined time span.

4. The device according to one of the preceding claims,
**characterized by** marking- and/or sorting means for the marking and/or sorting of sealing screws (3) classified as not tight by the seal testing means (18).

5. The device according to one of the preceding claims,
**characterized in that**
the test chamber (16) is a component of a pressure die (14), adjustable relative to the sealing screw (3), for acting upon the sealing surface (2) of the sealing screw (3) with the shaping force, or is a component of a fixedly arranged abutment for supporting the sealing screw (3) on application with the shaping force.

6. The device according to one of the preceding claims,
**characterized in that**
the test chamber (16) is connected with a pressure medium source, in particular a compressed air source.

7. The device according to one of the preceding claims,
**characterized in that**
control means are associated with the seal testing means (18), which control means are constructed initiating, preferably carrying out completely, the seal test still during the application of shaping force of the sealing screw (3) or alternatively during a reduced application of force, compared to the application of shaping force, by means of the shaping means.

8. The device according to one of the preceding claims,
**characterized in that**
the device comprises handling means, which are constructed to transfer from a store of bulk material, in particular a bulk material container, sealing screws (3) to the shaping means and the seal testing means.

9. The device according to one of the preceding claims,
**characterized in that**
there are associated with the sealing screw (3) and/or with the shaping means bearing means for the, in particular spherical, movable bearing of the sealing screw (3) and/or of the shaping means, to guarantee a parallelity of sealing surface (2) and of a contact surface of the shaping means.

10. A system comprising a device according to one of the preceding claims, and at least one sealing screw (3) of metal, preferably having an external thread shaft having a blind hole opening, in particular a cold extrusion part sealing screw.

11. The system according to Claim 10,
**characterized in that**
the system comprises a bulk material container with a plurality of sealing screws (3) as bulk material to be corrected and/or to be tested with regard to their tightness.

12. A method for the combined correction of the sealing surface (2) of sealing surfaces (2) of sealing screws (3) and for testing the sealing effect of the sealing screws (3), preferably using a sealing surface correction device according to one of the features 1 to 9,
**characterized by** the steps:
- providing at least one sealing screw (3) of metal, in particular handled as bulk material, in particular at least one cold extrusion part sealing screw, preferably in a bulk material container;
- acting upon a sealing surface (2), formed preferably on the lower face (10) of a screw head circumferential collar, with a shaping force for the correction of deformations of the sealing surface (2), in particular of indentations owing to a bulk material handling, wherein the shaping force is received from a test chamber (16) for testing the sealing effect of the sealing screw (3) or is transferred to the sealing surface (2) of the sealing screw (3);
- acting upon the sealing screw (3) with a pressure medium for testing the tightness of the sealing screw (3) by means of the test chamber (16), with which also the shaping force for correcting the deformations of the sealing surface (2) is transferred or received.

13. The method according to Claim 12,
**characterized in that**
the shaping force transferred from the test chamber (16) to the sealing screw (3) or received from the test chamber (16) is calculated such that material of the sealing screw (3) is displaced into the deformations, in particular notches, of the sealing surface (2).

14. The method according to one of Claims 12 or 13,
**characterized in that**
during the application of shaping force and the supplying of pressure medium, the test chamber (16) lies against the sealing surface (2) of the sealing screw (3) and preferably receives a screw shaft of the sealing screw (3).

15. The method according to one of Claims 12 to 14,
**characterized in that**
the tightness is tested by the test chamber (16) still during an application of force of the sealing surface (2).

16. The method according to one of Claims 12 to 15,
**characterized in that**
during the application of shaping force for correcting the sealing surface (2) and the seal test, the test chamber (16) lies at the same position of the sealing screw (3).

## Revendications

1. Dispositif de correction de surface d'étanchéité pour des vis d'étanchéité (3) en métal, traitées en particulier comme matériau en vrac, en particulier des vis d'étanchéité pour pièce d'extrusion à froid, muni de moyens de déformation, de préférence à entraînement hydraulique, pour l'application sur la surface d'étanchéité (2) aménagée de préférence sur le côté inférieur (10) d'une collerette périphérique d'une tête de vis, d'une vis d'étanchéité (3), d'une force de déformation en vue de la correction de déformations de la surface d'étanchéité (2), en particulier d'encoches résultant d'un traitement du matériau en vrac, ainsi que muni de moyens de contrôle de l'étanchéité (18) en vue de la vérification de l'effet d'étanchéité exercé par la vis d'étanchéité (3) par l'application d'une pression par un agent de pression, dans lequel une chambre de contrôle (16) pour l'application de l'agent de pression sur la vis d'étanchéité (3) fait partie du moyen de déformation.

2. Dispositif selon la revendication 1, **caractérisé en ce que** la chambre de contrôle (16) est conçue en vue de la réception d'une tige de vis de la vis d'étanchéité (3) pendant l'application de la force de déformation et l'application de l'agent de pression, ainsi que pour l'appui sur la surface d'étanchéité (2) de la vis d'étanchéité (3).

3. Dispositif selon l'une des revendications 1 ou 2, **caractérisé en ce que** les moyens de contrôle de l'étanchéité (18) comportent des moyens de classification, en particulier formés par des moyens logiques, qui sont conçus pour classer une vis d'étanchéité (3) comme étant non étanche si une pression minimale de l'agent de pression mesurable par une installation de mesure de la pression des moyens de contrôle de l'étanchéité (18) n'est pas maintenue pendant un laps de temps donné et/ou si une pression limite mesurable par l'installation de mesure est dépassée vers le bas pendant un laps de temps donné.

4. Dispositif selon l'une des revendications qui précèdent, **caractérisé par** des moyens de marquage et/ou de tri, en vue du marquage et/ou du tri de vis d'étanchéité (3) classées comme étant non étanches par les moyens de contrôle de l'étanchéité (18).

5. Dispositif selon l'une des revendications qui précèdent, **caractérisé en ce que** la chambre de contrôle (16) fait partie d'un piston (14) qui est réglable par rapport à la vis d'étanchéité (3) en vue d'appliquer sur la surface d'étanchéité (2) de la vis d'étanchéité (3) la force de déformation, ou une partie d'une butée disposée de manière à être fixée à demeure pour le soutien de la vis d'étanchéité (3) lors de l'application de la force de déformation.

6. Dispositif selon l'une des revendications qui précèdent, **caractérisé en ce que** la chambre de contrôle (16) est reliée à une source d'agent de pression, en particulier à une source d'air comprimé.

7. Dispositif selon l'une des revendications qui précèdent, **caractérisé en ce que** des moyens de commande sont affectés aux moyens de contrôle de l'étanchéité (18) ; ces moyens de commande sont configurés pour déclencher, de préférence effectuer entièrement, le contrôle d'étanchéité encore au moment de l'application de la force de déformation sur la vis d'étanchéité (3), ou alternativement pendant l'application d'une force réduite par rapport à l'application de la force de déformation par le biais du moyen de déformation.

8. Dispositif selon l'une des revendications qui précèdent, **caractérisé en ce que** le dispositif comporte des moyens de manipulation qui sont conçus de manière à transférer des vis d'étanchéité (3) à partir d'un stock de matériau en vrac, en particulier d'un récipient de matériau en vrac, vers les moyens de déformation et les moyens de contrôle de l'étanchéité.

9. Dispositif selon l'une des revendications qui précèdent, **caractérisé en ce qu'**on associe à la vis d'étanchéité (3) et/ou aux moyens de déformation, des moyens de stockage en vue de l'entreposage mobile, en particulier sphérique, de la vis d'étanchéité (3) et/ou des moyens de déformation, afin de garantir un parallélisme de la surface d'étanchéité (2) et une surface d'appui du moyen de déformation.

10. Système comprenant un dispositif selon l'une des revendications qui précèdent, et au moins une vis d'étanchéité (3) en métal comportant de préférence une tige à filetage extérieur comprenant un évidement à trou borgne, en particulier une vis d'étanchéité pour pièce d'extrusion à froid.

11. Système selon la revendication 10, **caractérisé en ce que** le système englobe en tant que matériau en vrac un récipient de matériau en vrac contenant une multitude de vis d'étanchéité (3) à corriger et/ou à contrôler sur le plan de leur étanchéité.

12. Procédé pour la correction combinée de la surface d'étanchéité (2) de surfaces d'étanchéités (2) de vis d'étanchéité (3), ainsi que pour le contrôle de l'effet d'étanchéité des vis d'étanchéité (3), de préférence en utilisant un dispositif de correction de surface d'étanchéité selon l'une des caractéristiques 1 à 9, **caractérisé par** les étapes suivantes :
- Mise à disposition d'au moins une vis d'étanchéité (3) en métal, en particulier traitée comme matériau en vrac, en particulier au moins une vis d'étanchéité de pièce d'extrusion à froid, de préférence dans un récipient de matériau en vrac ;
- Application d'une force de déformation sur la surface d'étanchéité (2) réalisée de préférence sur le côté inférieur (10) d'une collerette périphérique d'une tête de vis de la vis d'étanchéité (3) à contrôler, afin de corriger des déformations de la surface d'étanchéité (2), en particulier des encoches résultant du traitement du matériau en vrac, la force de déformation étant absorbée par une chambre de contrôle (16) pour le contrôle de l'effet d'étanchéité de la vis d'étanchéité (3), ou bien transmise à la surface d'étanchéité (2) de la vis d'étanchéité (3).
- Application d'un agent d'étanchéité sur la vis d'étanchéité (3) en vue du contrôle de l'étanchéité de la vis d'étanchéité (3) par le biais de la chambre de contrôle (16), par laquelle la force de déformation est également transmise ou absorbée en vue de la correction des déformations de la surface d'étanchéité (2).

13. Procédé selon la revendication 12, **caractérisé en ce que** la force de déformation transmise par la chambre de contrôle (16) sur la vis d'étanchéité (3) ou absorbée par la chambre de contrôle (16) est dimensionnée de telle façon que le matériau de la vis d'étanchéité (3) est introduit de force dans les déformations, en particulier dans les encoches de la surface d'étanchéité (2).

14. Procédé selon l'une des revendications 12 ou 13, **caractérisé en ce que** la chambre de contrôle (16) repose contre la surface d'étanchéité (2) de la vis d'étanchéité (3) pendant l'application de la force de déformation et l'application de l'agent de pression, et reçoit de préférence une tige de vis de la vis d'étanchéité (3).

15. Procédé selon l'une des revendications 12 à 14, **caractérisé en ce que** l'étanchéité est encore contrôlée au moment de l'application d'une force sur la surface d'étanchéité (2) par la chambre de contrôle (16).

16. Procédé selon l'une des revendications 12 à 15, **caractérisé en ce que** pendant l'application de la force de déformation pour la correction de la surface d'étanchéité (2) et le contrôle de l'étanchéité, la chambre de contrôle (16) repose contre la même position de la vis d'étanchéité (3).
